# EUROPÄISCHE PATENTSCHRIFT

(11) **EP 2 512 873 B1**
(45) Veröffentlichungstag und Bekanntmachung des Hinweises auf die Patenterteilung: **22.01.2014**
(21) Anmeldenummer: 10794993.5
(22) Anmeldetag: 17.12.2010
(51) Int. Cl.: B60R 21/2165, B26D 3/08, C14B 5/00, B23K 26/40

(54) **EGALISIERUNG EINER AUSGEDÜNNTEN DEKORSCHICHT**
EQUALIZATION OF A THINNED DECORATIVE LAYER
EGALISATION D'UNE COUCHE DE DÉCORATION AMINCIE

(30) Priorität: 17.12.2009 DE 102009054859
(43) Veröffentlichungstag der Anmeldung: 24.10.2012
(73) Patentinhaber: Lisa Dräxlmaier GmbH, 84137 Vilsbiburg (DE)
(72) Erfinder: SCHLEMMER, Christian, 84034 Landshut (DE)
(74) Vertreter: HOFFMANN EITLE
(86) Internationale Anmeldenummer: PCT/EP2010/070081
(87) Internationale Veröffentlichungsnummer: WO 2011/083032

(56) Entgegenhaltungen:
- EP-A1- 1 588 906
- EP-A1- 1 745 989
- EP-A2- 0 586 222
- WO-A1-2009/074238
- DE-A1-102005 055 553
- DE-A1-102007 017 602

## Beschreibung

### Technisches Gebiet

Die vorliegende Erfindung betrifft ein Verfahren zur Herstellung eines Dekorteils, insbesondere zur Verwendung in Fahrzeugen, mit einer flexiblen Dekorschicht, beispielsweise aus Leder, und einer Stabilisierungsschicht.

### Hintergrund der Erfindung

Airbagabdeckungen zur Verwendung in einem Kraftfahrzeug werden üblicherweise im Bereich der Instrumententafel oder im Lenkrad sowie den Türen, Sitzen oder in Bereichen des Dachhimmels des Kraftfahrzeugs verwendet und sollen zum einen eine ansprechende Optik aufweisen und zum anderen die Entfaltung des Airbags im Auslösefall nicht behindern oder stören.

Insbesondere in Kraftfahrzeugen der gehobenen Mittelklasse und Oberklasse wird besonderer Wert darauf gelegt, dass die Funktion der Airbagabdeckung, nämlich das Aufreißen im Auslösefall, keinen Einfluss auf die Optik der Dekoroberfläche aufweist.

Die DE 10 2007 017 602 A1 beschreibt eine Airbagabdeckung, in der eine unsichtbarer Aufreißlinien angestrebt wird. Dazu wird die Dekorschicht, in dem besagten Dokument eine Lederschicht, mit einer partiellen Schwächung zur Einleitung eines Risses und/oder dessen Ausbreitung entlang einer vorab definierten Strecke versehen. Die partielle Ausdünnung der Dekorschicht lässt die sichtbare Dekoroberfläche unbearbeitet.

Dennoch ergeben sich durch die Ausdünnung Probleme, die sich auch auf die Optik von der Fahrgastseite aus durchschlagen können. Durch die Ausdünnung der Dekoroberfläche ist es möglich, dass die äußere Kontur im Querschnitt der Dekorschicht die vorgesehene Designlage aufgrund des entstandenen Hohlraums verlässt, was im ungünstigsten Fall für das Auge des Betrachters sichtbar wird.

Ein zweites Problem resultiert aus der Verbindung der Dekoroberfläche mit Bauteilen der Airbagvorrichtung, wie beispielsweise Airbagklappe oder Schusskanalrahmen. Eine solche Verbindung erfolgt beispielsweise durch Schweißen oder Presskaschieren. Hierbei wird ein Druck auf den ausgedünnten Bereich ausgeübt. Insbesondere dann, wenn bei Verwendung von nicht ausgedünnter Dekorschicht mit gleichem Schweißaufnahmeoder Presskaschierwerkzeug gearbeitet wird, kann es bei ausgedünnter Dekorschicht zu mangelnder Haftung zwischen Schusskanalrahmen und I-Tafel-Träger kommen.

Die gattungsgemäße EP 1 745 989 A1 beschreibt eine Airbagabdeckung mit unsichtbarer Airbagreißlinie, wobei die Airbagabdeckung eine Dekorschicht aus Leder, einen festen Träger und zwischen Träger und Dekorschicht eine weitere Schicht aufweist. Die weitere Schicht kann eine Schaumstoffschicht oder ein Abstandsgewirke sein. Der ausgedünnte Bereich wird in diesem Dokument dadurch ausgeglichen, dass entweder der Träger oder die Schicht zwischen Träger und Lederschicht die Form der Ausdünnung nachempfindet. In beiden Fällen ist eine sehr hohe Bearbeitungsgenauigkeit erforderlich, um die Unsichtbarkeit der Ausdünnung auf der Sichtseite zu gewährleisten. Insbesondere ist eine exakte relative Positionierung der Schichten und somit ein hoher Bearbeitungsaufwand erforderlich.

Es hat sich außerdem gezeigt, dass in vielen Fällen der ausgedünnte Bereich zunächst unsichtbar ist, sich aber im Verlaufe der Zeit Aufreißlinien oder Aussparungsbereiche abzeichnen. Der Grund hierfür liegt in der Beanspruchung der Materialien, beispielsweise durch Temperaturwechsel.

### Kurze Beschreibung der Erfindung

Eine Aufgabe der Erfindung besteht darin, ein Verfahren zur Herstellung eines Dekorteils mit einer rückseitig ausgedünnten Dekorschicht bereitzustellen, wobei die Ausdünnung von der Sichtseite unsichtbar ist und die Herstellung des Dekorteils vereinfacht ist.

Die Aufgabe wird mit einem Verfahren nach Anspruch 1 gelöst.

Das Dekorteil umfasst eine flexible Dekorschicht, beispielsweise aus Leder, und eine Stabilisierungsschicht, beispielsweise aus Textil oder Vlies. Zum definierten Aufreißen der Dekorschicht wird die Dekorschicht teilweise ausgedünnt, so dass auf der Seite, die der Dekoroberfläche, d.h. der Sichtseite, gegenüberliegt, ein ausgedünnter Bereich hergestellt wird, dessen Schichtdicke geringer als der eines nicht ausgedünnten Bereichs ist. Der ausgedünnte Bereich wird auch als partielle Schwächung bezeichnet. In einem zweiten Schritt wird eine Stabilisierungsschicht auf der ausgedünnten Seite der Dekorschicht aufkaschiert, so dass eine Verbundschicht aus Dekorschicht und Stabilisierungsschicht hergestellt wird. Der Verlauf der Kontur (im Querschnitt) der aufkaschierten Stabilisierungsschicht folgt dem Konturverlauf der flexiblen Dekorschicht. Insbesondere weist in diesem Stadium der Herstellung der Schichtverbund aus Dekorschicht und Stabilisierungsschicht eine geringere Gesamtdicke im ausgedünnten Bereich als in den nicht ausgedünnten Bereichen auf. In einem weiteren Schritt wird Material auf der Seite der Verbundschicht abgetragen, die der Dekoroberfläche gegenüberliegt. Zumindest wird dabei Material von der Stabilisierungsschicht abgetragen. Der Materialabtrag erfolgt vorzugsweise so, dass die Verbundschicht zumindest teilweise egalisiert wird. "Teilweises Egalisieren" bedeutet, dass die Verbundschicht nach dem Egalisierungsschritt eine gleichmäßigere Dicke aufweist als vorher. Die auf diese Weise hergestellte Verbundschicht ist dazu geeignet, in weiteren Verfahrensschritten weiterverarbeitet zu werden. Die hergestellte Verbundschicht bildet somit ein Halbzeug. Die Weiterverarbeitung ist möglich, ohne auf den ausgedünnten Bereich in besonderer Weise Rücksicht zu nehmen, d.h. die Verbundschicht ist wie eine einzige Lage aus nur einem Material weiterverarbeitbar. Bei der Verwendung der Verbundschicht als Teil einer Airbagabdeckung ist es ggf. ausreichend, den Schwächungsbereich lediglich an den Orten mit der Stabilisierungsschicht zu stabilisieren, auf die bei der Weiterverarbeitung der Verbundschicht Druck aufgebracht wird, beispielsweise an Orten, wo die Dekorschicht mit einer Airbagklappe oder einem Schusskanalrahmen verbunden wird. Die Stabilisierungsschicht ist vorzugsweise aus einem Material ausgebildet, das im Vergleich zur Dekorschicht beim Auslösen des Airbags einfacher einreißt. Somit wird die Funktionalität des ausgedünnten Bereichs als Bereich zur Rissbildung nicht oder nur wenig beeinträchtigt.

Vorzugsweise besteht die Dekorschicht aus Leder oder einem lederähnlichen Material, das in der Innenausstattung beim Fahrzeugbau eine große Rolle spielt. Ebenso denkbar ist aber auch eine Dekorschicht aus Planware (mit/ohne Textil/Vliesbeschichtung), Folie, Holz, Holzimitat, Naturfaser, Textil, Papier, Cellulose oder Gemischen aus Naturfasern, ggf. auch mit Beimischungen von Cellulose und/oder Polymeren.

Vorzugsweise umfasst die Stabilisierungsschicht ein Textil oder Vlies. Die Stabilisierungsschicht soll gewährleisten, dass sich der ausgesparte Bereich auf der Seite der Dekoroberfläche nicht abzeichnet und sich auch im Verlaufe der Zeit, d.h. mit Beanspruchung der Materialien nicht abzeichnen wird. Gleichzeitig soll die Materialauswahl vorzugsweise so erfolgen, dass die Funktionalität (Aufreißverhalten bei Airbagauslösung) des ausgesparten Bereichs nicht oder zumindest nur wenig beeinträchtigt wird.

Somit eignen sich neben Textil und Vlies auch Schaummaterialien, Gewirke, Polymere oder Verbundschichten dafür. Insbesondere seien mit einem Polymermaterial beschichtete Textile oder Vliese, oder in ein Polymermaterial eingebettete Textile oder Vliese genannt. Auch Leder, Spaltleder oder lederähnliche Materialien mit einer geringeren Reißfestigkeit als das verwendete Dekor oder mit einer für den Airbagriss versehenen Vorschwächung können als Stabilisierungsschicht verwendet werden. Die Stabilisierungsschicht kann dabei ein- oder mehrschichtig aufgebaut sein. Die Schichtung kann dabei auch aus unterschiedlichen Schichtmaterialien bestehen.

Vorzugsweise erfolgt der Schritt des Materialabtrags am Schichtverbund so, dass die Verbundschicht aus Dekorschicht und Stabilisierungsschicht im Wesentlichen eine konstante Schichtdicke aufweist. Eine solche nicht nur teilweise ausgeführte Egalisierung ist einfach und effizient durchführbar. Außerdem lässt sich die im Wesentlichen vollständig egalisierte Verbundschicht besonders einfach weiterverarbeiten. Zur Steuerung des Anpressdruckes bei Fügeoperationen wie Schweißen oder Kaschieren kann es sinnvoll sein, die Schichtdicken an gezielt zu variieren.

Vorzugsweise wird die Ausdünnung der Dekorschicht mittels Schärfspalten, Lasern oder Wasserstrahlen ausgeführt. Beim Schärfspalten wird die zu bearbeitende Schicht oder Lage über eine Schablone gelegt, die an definierten Stellen Erhebungen bzw. Senken aufweist. Ein üblicherweise zum Spalten verwendetes Messer wird dann über die Lederhaut bewegt. An den Stellen, an denen die Schablone die Lederhaut über den Pfad des Messers hinaus hervorstehen lässt, werden teilweise oder vollständig Teile der Lederhaut abgeschnitten. Die abgeschnittenen Teile können dabei wie beim Schärfen in eine Vielzahl von Einzelteilen zerfallen oder wie beim Spalten zusammenhängend bleiben. Neben dem Schärfen und Schärfspalten lässt sich das Material auch durch Laserbearbeitung, Schleifen, Fräsen und/oder Polieren so bearbeiten, dass ein Aussparungsbereich hergestellt wird. Zum Schärfspalten bzw. Spalten ermöglicht eine scharfe Klinge in Form eines Bandmessers ein exaktes Abtragsverhalten, das gleichmäßiger als beim Schleifen ist. Auf diese Weise entstehen kein Staub und kein Faserausriss.

Aus den obigen Gründen erfolgt auch der Materialabtrag vorzugsweise mittels Lasern oder Schärfspalten. Allerdings erfolgt, im Gegensatz zur Herstellung des Aussparungsbereichs, der Materialabtrag im betreffenden Verfahrensschritt am Materialverbund aus Dekorschicht und Stabilisierungsschicht. In der Vergangenheit war insbesondere das Schärfspalten an Verbundschichten dieser Art problematisch, da es zu einem Ablösen bzw. einer Trennung der die Verbundschicht bildenden Schichten kommen konnte. Somit werden vorzugsweise Maßnahmen ergriffen, welche die Haftung der Stabilisierungsschicht an der Dekorschicht verbessern. Dazu kann beispielsweise ein starker Kleber zwischen den beiden Schichten vorgesehen sein. Zusätzlich dazu weist die Dekorschicht vorzugsweise eine auf der Rückseite der Dekorschicht eingebrachte Perforation auf, die für eine Hinterkrallung mit dem Kleber geeignet ist. Unter Perforation ist hier eine Mehrzahl von Öffnungen zu verstehen, die auf der Rückseite eingebracht sind und die Dekorschicht vorzugsweise nicht vollständig durchlaufen. Alternativ kann auch ein linienförmiger Graben vorgesehen sein, in den zusätzlich Perforationen eingebracht werden.

Folgende Verfahrens- und Produktparameter haben sich für den Materialabtrag an der Verbundschicht als geeignet herausgestellt; sie sind beispielhaft: Textilien für die Stabilisierungsschicht mit Grammaturen von 28 gv, 50 gv, 75 gv, 190 gv bis zu einer Dicke von 0,1 mm; reines Polyester (PET) oder PET-Gemische; Gewebedicke von 0,2 bis 1,0 mm, bei Vliesen ist das Maß ca. 0,1 bis 0,5 mm höher, da diese stärker komprimierbar sind; Haftungswerte zwischen Textil und Leder (als Dekorschicht) bei ca. 40 bis 50 N/5 cm bei Raumtemperatur; optimaler sind 100 N/5 cm bei 85°C.

Ferner ist auch eine Plasmabehandlung der perforierten Dekorschicht zur Haftverbesserung möglich.

Die Erfindung betrifft ebenfalls ein Verfahren zur Herstellung einer Airbagabdeckung, bei dem ein Dekorteil, das wie oben beschrieben hergestellt wird, mit zumindest einem weiteren Element unter Druck verbunden wird. Die Stabilisierungsschicht ist hierbei im Bereich des weiteren Elements vorgesehen. Das weitere Element kann beispielsweise eine Airbagklappe und/oder ein Schusskanalrahmen sein. Die Verbindung des Dekorelements mit dem zumindest einen weiteren Element kann über Schweißen erfolgen. Hierbei ist nicht erforderlich, dass das Dekorelement mit dem weiteren Element direkt in Kontakt steht. Weitere Schichten und/oder Trägerelemente können dazwischen vorgesehen sein.

### Kurze Beschreibung der zeichnungen

- Fig. 1: zeigt eine Verbundschicht aus einer Dekorschicht mit Aussparungsbereich und einer Stabilisierungsschicht vor dem Egalisierungsschritt.
- Fig. 2: zeigt die in Fig. 1 dargestellte Verbundschicht nach dem Egalisierungsschritt.
- Fig. 3: zeigt den Querschnitt einer Airbagabdeckung mit Airbagklappe, Schusskanalrahmen und einem Dekorelement mit Stabilisierungsschicht und Dekorschicht.
- Fig. 4: zeigt verschiedene Öffnungsquerschnitte einer Perforation zur Verbesserung der Haftung zwischen Dekorschicht und Stabilisierungsschicht.
- Fig. 5: betrifft ebenfalls die Verbesserung der Haftung zwischen Dekorschicht und Stabilisierungsschicht.
- Fig. 6: zeigt eine Stabilisierungsschicht mit konturierter Schärfspaltung.

### Wege zur Ausführung der Erfindung

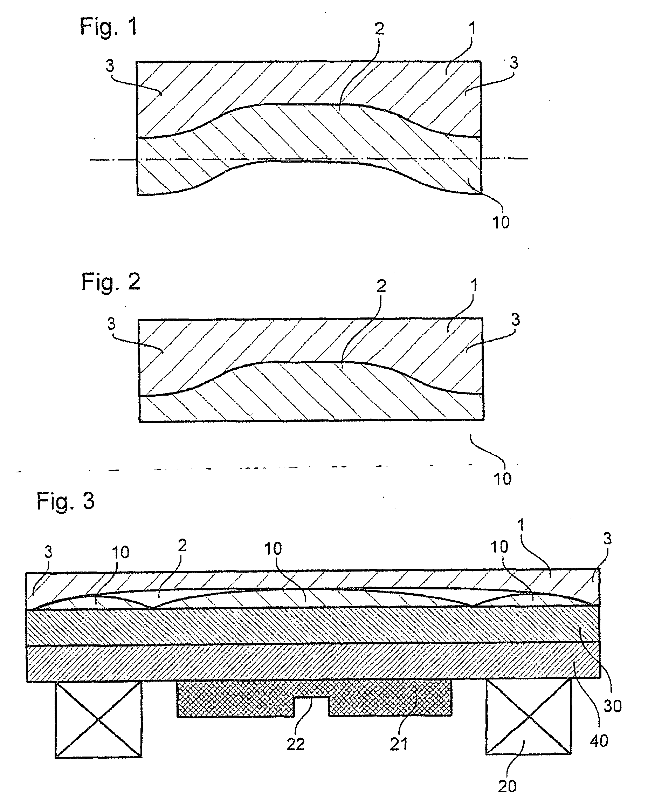

Fig. 1 zeigt eine Verbundschicht aus einer Dekorschicht 1 und einer Stabilisierungsschicht 10. Die Dekorschicht 1 weist einen ausgesparten Bereich 2 auf, der durch Schärfspalten, Lasern oder ein anderes geeignetes Verfahren ausgebildet wird. Die Dicke der Dekorschicht 1 ist im ausgesparten Bereich 2 kleiner als die Dicke der Dekorschicht 1 in den unbearbeiteten Abschnitten 3. Auf die Unterseite der Dekorschicht 1, d.h. auf die der Dekoroberfläche bzw. Sichtseite gegenüberliegenden Seite, ist in der Fig. 1 bereits ein Textil oder Vlies als Stabilisierungsschicht 10 aufkaschiert. Das Textil oder Vlies kann mit einem Polymer beschichtet sein oder in einem Polymer teilweise oder vollständig eingebettet sein, um die Spalteigenschaften des Verbunds zu verbessern.

Die Stabilisierungsschicht 10 kann durch Verkleben mit der Dekorschicht 1 verbunden werden. Ferner ist ein Aufsprühen, Aufgießen der Stabilisierungsschicht 10 oder ein Ausbilden des Verbunds durch Befüllen denkbar. Der egalisierte Dekorverbund bildet vorzugsweise ein Halbzeug, das als Zwischenprodukt zur Weiterverarbeitung, beispielsweise für eine Airbagabdeckung, vorgesehen ist.

Um den Niveauunterschied auf der Rückseite des Dekorverbunds aus Dekorschicht 1 und Stabilisierungsschicht 10 auszugleichen, wird der Verbund auf seiner Rückseite egalisiert. Das Ergebnis einer vollständigen Egalisierung ist in Fig. 2 gezeigt, in der die Schichtdicke der Verbundschicht konstant ist. Somit lässt sich der Dekorverbund wie eine als Lage ausgebildete Dekorschicht 1 weiterverarbeiten. Ferner wird auf diese Weise sichergestellt, dass sich später keine Merkmale der partiellen Schwächung der Dekorschicht 1 auf der Dekorseite, d. h. in den Figuren 1 und 2 oben, abzeichnet. Der Materialabtrag in diesem Egalisierungsschritt kann durch Schärfspalten, Spalten, Fräsen, Schleifen, Lasern usw. erfolgen. Wie es oben ausgeführt ist, muss keine vollständige Egalisierung stattfinden; es ist sogar denkbar, dass je nach Einsatzzweck bestimmte Konturen beim Egalisierungsschritt nachgebildet werden, um beispielsweise eine Trägerform zu berücksichtigen, auf die der Dekorverbund aufgebracht wird. Wichtig ist, dass die Egalisierung bzw. der Materialabtrag auf der der Sichtseite abgewandten Seite am bereits hergestellten Verbund stattfindet.

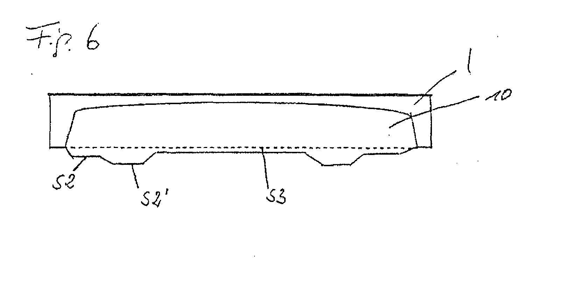

Wie es in Fig. 6 gezeigt ist, kann die Schärfspaltung konturiert erfolgen. Die durchgezogene Linie S2 zeigt eine konturierte Schärfspaltung am Dekorverbund mit Stabilisierungsschicht 10 und Dekorschicht 1 an. Die gestrichelte Linie S3 zeigt eine planare Schärfspaltung an. Je nach Kompressionsfähigkeit und Einstellungshöhe des gewünschten Anpressdrucks beim Fügen bewegt sich die Schärfspaltungslinie S2 und S3 der Stabilisierungsschicht nach oben und unten. Mit der Konturierung lässt sich somit der Anpressdruck beim Fügen, Schweißen oder anderen Verarbeitungsschritten des Halbzeugs einstellen und - auch lokal - steuern.

Fig. 3 zeigt einen Anwendungsfall des Dekorverbunds aus Stabilisierungsschicht 10 und Dekorschicht 1 für eine Airbagabdeckung, wobei die Stabilisierungsschicht 10 strukturiert ist. Die Stabilisierungsschicht kann aber auch wie in Fig. 1 unstrukturiert ausgeführt sein. Darüber hinaus ist es möglich, die Stabilisierungsschicht 10 im Bereich der Airbagklappe und/oder des Schusskanals und auch darüber hinaus mit gleich bleibender oder stetig abnehmender Wandstärke auszudünnen, um eine steuerbare Größe zu haben, um den Anpressdruck auf die Materialien bei den Fügeoperationen Schweißen und Kaschieren zu beeinflussen. Der ausgesparte Bereich 2 in Fig. 3 weist hier nur teilweise eine Stabilisierungsschicht 10 auf und zwar an den Stellen, wo während der Herstellung der Airbagabdeckung ein Druck auf die Dekorschicht 1 ausgeübt wird. Im vorliegenden Fall entsprechen diese Stellen der Anbringungsposition eines Schusskanalrahmens 20 und einer Airbagklappe 21. Die Airbagklappe 21 weist eine Aussparung 22 zur definierten Bruchbildung der Airbagklappe 21 auf. Weitere Schichten 30 und 40 können aus Gründen der Haptik und/oder Stabilisierung vorgesehen sein. Im vorliegenden Fall ist die Schicht 40 ein formstabiler Träger, an dem die Airbagklappe 21 angeschweißt ist, und die Schicht 30 ist eine Haptikschicht. Selbstverständlich können die Stabilisierungsschicht 10, die Haptikschicht 30 und/oder der formstabile Träger 40 ebenfalls Schwächungsbereiche zum definierten Aufreißen aufweisen.

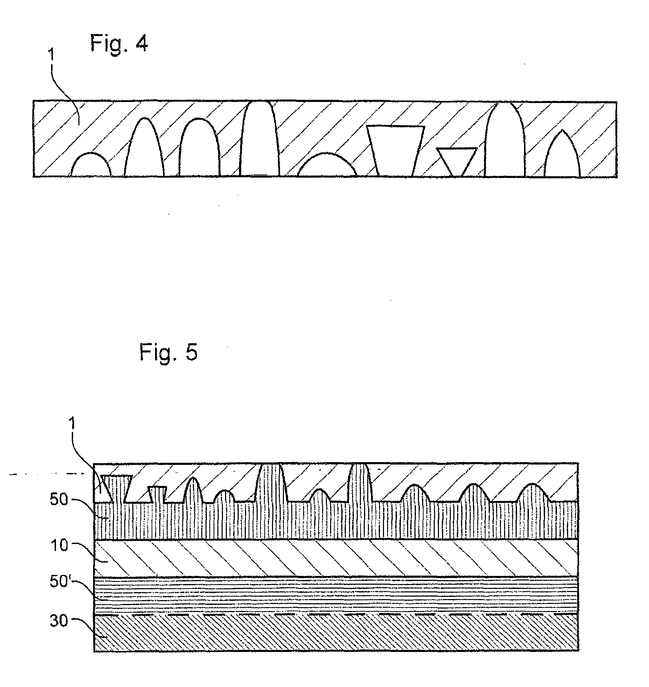

Wie es oben ausgeführt ist, findet der Materialabtrag beim Egalisierungsschritt am Dekorverbund statt. Dazu kann eine Haftungsoptimierung der beiden die Verbundschicht bildenden Schichten notwendig sein. Fig. 4 zeigt dazu verschiedene Öffnungsformen, die in die Dekorschicht 1 eingebracht sein können. Durch diese eine Perforation bildenden Öffnungen wird die Bindungsoberfläche vergrößert und ein zwischen Dekorschicht 1 und Stabilisierungsschicht 10 vorgesehener Kleber 50 (vgl. Fig. 5) kann in die Öffnungen der Perforation eindringen und die Bindung durch "Hinterkrallen" verbessern. Die zur Verbesserung der Haftung vorgesehene Perforation kann geometrisch gleiche Öffnungen oder unterschiedliche Öffnungen umfassen. Vorzugsweise durchlaufen diese Öffnungen die Dekorschicht 1 nicht vollständig. Ein beispielhafter Dekorverbund mit verbesserter Haftung zwischen Dekorschicht 1 und Stabilisierungsschicht 10 ist in Fig. 5 gezeigt. Neben der Dekorschicht 1, der Stabilisierungsschicht 10 und dem dazwischen vorgesehenen Kleber 50 sind eine weitere Klebschicht 50' auf der Rückseite des Verbunds aus Dekorschicht 1 und Stabilisierungsschicht 10 und ein Haptikmaterial 30, z. B. ein Abstandsgewirke, vorgesehen. Hierbei können Öffnungen auch an der oberen Lage des Abstandsgewirkes vorgesehen sein, damit Klebemasse zur Verkrallung eindringen kann. Diese Öffnungen können durch Vermaschung oder nachträglich eingebrachte Laserperforierung hergestellt werden.

## Patentansprüche

1. Verfahren zur Herstellung eines Dekorteils zur Verwendung in Fahrzeugen, mit einer flexiblen Dekorschicht (1) und einer Stabilisierungsschicht (10), wobei das Verfahren die folgenden Schritte umfasst:
a) teilweises Ausdünnen der flexiblen Dekorschicht (1), so dass auf einer Ausdünnungsseite der Dekorschicht (1) ein ausgedünnter Bereich hergestellt wird, dessen Schichtdicke geringer als der eines nicht ausgedünnten Bereichs ist;
b) Aufbringen der Stabilisierungsschicht (10) auf der Ausdünnungsseite der Dekorschicht (1), so dass eine Verbundschicht aus Dekorschicht (1) und Stabilisierungsschicht (10) hergestellt wird;
c) Abtragen von Material von zumindest der Stabilisierungsschicht (10) an der hergestellten Verbundschicht.

2. Verfahren nach Anspruch 1, **dadurch gekennzeichnet, dass** die Dekorschicht (1) aus Leder oder einem lederähnlichen Material besteht.

3. Verfahren nach Anspruch 1 oder 2, **dadurch gekennzeichnet, dass** die Stabilisierungsschicht (10) Textil oder Vlies umfasst.

4. Verfahren nach Anspruch 3, **dadurch gekennzeichnet, dass** das Textil oder Vlies mit einem Polymermaterial beschichtet oder das Textil oder Vlies ganz oder teilweise in einem Polymermaterial eingebettet ist.

5. Verfahren nach einem der vorhergehenden Ansprüche, **dadurch gekennzeichnet, dass** der Schritt c) ein Egalisierungsschritt ist, bei dem Ungleichmäßigkeiten der Schichtdicke der Verbundschicht, die durch die Ausdünnung der Dekorschicht (1) hervorgerufen werden, ausgeglichen werden, so dass eine Verbundschicht mit im Wesentlichen konstanter Schichtdicke hergestellt wird.

6. Verfahren nach einem der vorhergehenden Ansprüche, **dadurch gekennzeichnet, dass** die Ausdünnung im Schritt a) mittels Schärfspalten, Schleifen oder Lasern durchgeführt wird.

7. Verfahren nach einem der vorhergehenden Ansprüche, **dadurch gekennzeichnet, dass** der Materialabtrag im Schritt c) mittels Schärfspalten oder Lasern durchgeführt wird.

8. Verfahren nach einem der vorhergehenden Ansprüche, **dadurch gekennzeichnet, dass** die Haftung der Stabilisierungsschicht (10) an der Dekorschicht (1) mittels eines Klebers dazwischen verbessert wird.

9. Verfahren nach einem der vorhergehenden Ansprüche, **dadurch gekennzeichnet, dass** die Haftung der Stabilisierungsschicht (10) an der Dekorschicht mittels einer in die Dekorschicht (1) eingebrachten Perforation und einer Hinterkrallung mit einem Kleber verbessert wird.

10. Verfahren zur Herstellung einer Airbagabdeckung, bei dem ein Dekorteil, das nach einem der vorhergehenden Ansprüche hergestellt wird, mit zumindest einem weiteren Element unter Druck verbunden wird, wobei die Stabilisierungsschicht (10) im Bereich des weiteren Elements vorgesehen ist.

11. Verfahren nach Anspruch 10, **dadurch gekennzeichnet, dass** das weitere Element eine Airbagklappe und/oder ein Schusskanalrahmen ist.

12. Verfahren nach Anspruch 10 oder 11, **dadurch gekennzeichnet, dass** die Verbindung des Dekorelements mit dem zumindest einen weiteren Element über Schweißen erfolgt.

## Claims

1. Method for manufacturing a decorative part for use in vehicles, with a flexible decorative layer (1) and a stabilising layer (10), the method comprising the following steps:
a) partially thinning the flexible decorative layer (1) so that on a thinning side of the decorative layer (1) a thinned region is produced, the layer thickness of which is less than that of an unthinned region;
b) applying the stabilising layer (10) to the thinning side of the decorative layer (1), so that a composite layer consisting of decorative layer (1) and stabilising layer (10) is produced;
c) removing material from at least the stabilising layer (10) on the composite layer produced.

2. Method according to claim 1, **characterised in that** the decorative layer (1) is made of leather or a leather-like material.

3. Method according to claim 1 or 2, **characterised in that** the stabilising layer (10) comprises textile material or fleece.

4. Method according to claim 3, **characterised in that** the textile material or fleece is coated with a polymer material, or the textile material or fleece is partially or completely embedded in a polymer material.

5. Method according to any of the preceding claims, **characterised in that** step c) is a levelling step in which unevenness in the thickness of the composite layer which is caused by thinning of the decorative layer (1) is levelled out so that a composite layer having a substantially constant layer thickness is produced.

6. Method according to any of the preceding claims, **characterised in that** thinning in step a) is carried out by skiving/splitting, grinding or lasering.

7. Method according to any of the preceding claims, **characterised in that** the removal of material in step c) is carried out by skiving/splitting or lasering.

8. Method according to any of the preceding claims, **characterised in that** adhesion of the stabilising layer (10) to the decorative layer (1) is improved by means of an adhesive between them.

9. Method according to any of the preceding claims, **characterised in that** adhesion of the stabilising layer (10) to the decorative layer is improved by means of perforations made in the decorative layer (1) and swiping behind with an adhesive.

10. Method for manufacturing an airbag cover, in which a decorative part which is manufactured according to any of the preceding claims is joined to at least one further element under pressure, the stabilising layer (10) being provided in the region of the further element.

11. Method according to claim 10, **characterised in that** the further element is an airbag flap and/or a shot channel frame.

12. Method according to claim 10 or 11, **characterised in that** the decorative element is joined to the at least one further element by welding.

## Revendications

1. Procédé de fabrication d'une pièce décorative destinée à être utilisée dans des véhicules, avec une couche décorative flexible (1) et une couche de stabilisation (10), ledit procédé comprenant les étapes suivantes :
a) amincissement partiel de la couche décorative (1), de manière à réaliser une zone amincie sur une face d'amincissement de la couche décorative flexible (1), dont l'épaisseur de couche soit inférieure à celle d'une zone non amincie ;
b) application de la couche de stabilisation (10) sur la face d'amincissement de la couche décorative (1), de manière à réaliser une couche composite formée de la couche décorative (1) et de la couche de stabilisation (10) ;
c) enlèvement de matière d'au moins la couche de stabilisation (10) sur la couche composite réalisée.

2. Procédé selon la revendication 1, **caractérisé en ce que** la couche décorative (1) est en cuir ou en matériau similaire au cuir.

3. Procédé selon la revendication 1 ou 2, **caractérisé en ce que** la couche de stabilisation (10) contient du textile ou de l'étoffe non tissée.

4. Procédé selon la revendication 3, **caractérisé en ce que** le textile ou l'étoffe non tissée sont revêtus d'un matériau polymère, ou **en ce que** le textile ou l'étoffe non tissée sont totalement ou partiellement enrobés d'un matériau polymère.

5. Procédé selon l'une des revendications précédentes, **caractérisé en ce que** l'étape c) est une étape d'égalisation, où sont compensées des inégalités d'épaisseur de couche de la couche composite dues à l'amincissement de la couche décorative (1), de manière à réaliser une couche composite avec une épaisseur de couche sensiblement constante.

6. Procédé selon l'une des revendications précédentes, **caractérisé en ce que** l'amincissement est effectué en étape a) par parage, par ponçage, ou au moyen d'un laser.

7. Procédé selon l'une des revendications précédentes, **caractérisé en ce que** l'enlèvement de matériau est effectué en étape c) par parage, ou au moyen d'un laser.

8. Procédé selon l'une des revendications précédentes, **caractérisé en ce que** l'adhérence de la couche de stabilisation (10) contre la couche décorative (1) est améliorée par intercalation d'une colle.

9. Procédé selon l'une des revendications précédentes, **caractérisé en ce que** l'adhérence de la couche de stabilisation (10) contre la couche décorative est améliorée par une perforation de la couche décorative (1) et par son accrochage par une colle.

10. Procédé de fabrication d'un couvercle de coussin gonflable de sécurité, où une pièce décorative fabriquée selon l'une des revendications précédentes est raccordée sous pression à au moins un autre élément, la couche de stabilisation (10) étant prévue au niveau de l'autre élément.

11. Procédé selon la revendication 10, **caractérisé en ce que** l'autre élément est un volet d'airbag et/ou un cadre de canal d'éjection.

12. Procédé selon la revendication 10 ou 11, **caractérisé en ce que** le raccordement de l'élément décoratif à l'autre ou aux autres éléments est effectué par soudage.
